Europäisches Patentamt
European Patent Office
Office européen des brevets

(19)

(11) Publication number: **0 296 250 A1**

(12) # EUROPEAN PATENT APPLICATION

published in accordance with Art. 158(3) EPC

(21) Application number: 88900590.6

(51) Int. Cl.[3]: C 08 G 75/02

(22) Date of filing: 25.12.87

Data of the international application taken as a basis:

(86) International application number: PCT/JP87/01038

(87) International publication number: WO88/05061 (14.07.88 88/15)

(30) Priority: 26.12.86 JP 312834/86
02.02.87 JP 22035/87

(43) Date of publication of application: 28.12.88 Bulletin 88/52

(84) Designated Contracting States: BE CH DE FR GB IT LI NL SE

(71) Applicant: IDEMITSU PETROCHEMICAL COMPANY LIMITED
1-1, Marunouchi 3-chome Chiyoda-ku
Tokyo 100(JP)

(72) Inventor: OGATA, Norio Idemitsu Petrochem. Comp. Ltd.
1660, Kamiizumi Sodegaura-machi
Kimitsu-gun Chiba-ken 299-02(JP)

(72) Inventor: SENGA, Minoru Idemitsu Petrochem. Comp. Ltd.
1660, Kamiizumi Sodegaura-machi
Kimitsu-gun Chiba-ken, 299-02(JP)

(72) Inventor: YAMATO, Hiroyasu
1660, Kamiizumi Sodegaura-machi
Kimitsu-gun Chiba-ken, 299-02(JP)

(74) Representative: Patentanwälte TER MEER - MÜLLER - STEINMEISTER
Mauerkircherstrasse 45
D-8000 München 80(DE)

(54) **POLYARYLENE SULFIDE AND PROCESS FOR ITS PRODUCTION.**

(57) It has a high molecular weight and an excellent moldability, and is suited as a material for moldings such as various films, fibers, etc. It comprises 90 to 99.99 wt% of structural units (I) represented by the formula (1)

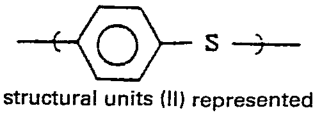

• • • [1]

and 10 to 0.01 wt % of structural units (II) represented by formula (2),

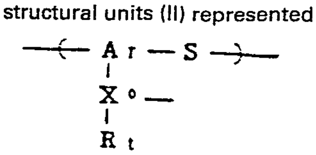

• • • [2]

(wherein Ar represents an aromatic residue, X° represents –N–, –S– or –O–, R represents a hydrogen atom, an alkyl group or an aryl group and, when X° represents –N–, t represents 1 and, when X° represents –S– or –O–, t represents 0) and has a weight-average molecular weight of 2,000 to 500,000.

EP 0 296 250 A1

# SPECIFICATION

## Title of the Invention

Polyarylene sulfides and process of preparing the same

## BACKGROUND OF THE INVENTION

### Field of the Invention

This invention relates to polyarylene sulfides and a process of preparing the same, and more particularly to the polymers of higher molecular weight, and superior moldability as well as good crystallizability, thus which are useful as material for manufacturing films, fibers and various other molded objects.

### Description of the Prior Art

Polyarylene sulfides such as polyphenylene sulfide are generally thermoplastic resins, excluding some of them which are thermosetting, which have desirable characteristics as engineering plastics such as high resistance to chemicals, good mechanical properties over a wide temperature range, and high stiffness at high temperatures.

As known, generally polyarylene sulfides such as polyphenylene sulfide are obtained by the polymerization reaction of a dihalogenated aromatic compound and an alkali metal sulfide in a polar solvent. For example, the manufacture of polyphenylene sulfide is carried out by the

polymerization reaction of p-dichlorobenzene and sodium sulfide in a polar solvent. (Japanese Examined Patent Publication No.12240/1977).

Alkali metal sulfide is usually available in the form of hydrate, and owing to this the preparation of polyarylene sulfides must be carried out in two steps: dehydration of hydrous alkali metal sulfide and polycondensation.

The dehydration, which is generally carried out by azeotropic distillation in the presence of a polar solvent, presents a problem that a stainless reactor for the reaction is affected by hydrogen sulfide gas produced as a by-product of the reaction, with corrosion accompanied by the dissolving-out of impurities from the inner reactor wall and in turn the admixture of them with the polar solvent, resulting in lowered purity and lessened whiteness of the product. Besides it becomes impossible to recover the polar solvent in state subjected to a permissibly small degree to denaturation.

As a solution of the above-mentioned problem, the use of a titanium reactor is disclosed in Japanese Laid-open Patent Application No. 23637/1986, which is expensive and disadvantageous for industrial production.

Another process of preparing polyphenylene sulfide of higher molecular weight is disclosed in U.S. Pat. No.

4,038,263, in which lithium halide was used as a catalyst. In this process however polyphenylene sulfides of higher molecular weight and enough good melt property to be molded into films, fibers and non-reinforced molded objects cannot be obtained.

In addition, a process of preparing high molecular weight and branched-chain polyphenylene sulfide in which in the presence of a compound having three or more halogens in the reaction system (disclosed in Japanese Examined Patent Publication No. 87919/1979 and Japanese Laid-open Patent Application No. 197430/1984) has a great difficulty of obtaining products liable to change into gel and having much low crystallizability.

OBJECTS AND SUMMARY OF THE INVENTION

Under the above circumstances this invention has been accomplished. It is an object of the present invention to provide polyarylene sulfides which are of high molecular weight and good in crystallizability and moldability.

Another object of this invention is to provide a process of preparing white, high purity (i.e., low content of salt impurities) polyarylene sulfides which are of high molecular weight and good in crystallizability without causing the reaction apparatus to be corroded during hydration and polycondensation.

A further object of the invention is to provide a process of preparing stable polyarylene sulfides which will not change into gel.

The above-mentioned object has been achieved by polyarylene sulfides according to the invention which is characterized by:

having a repeating unit (I) represented by the formula

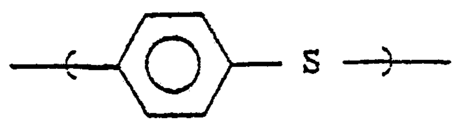

... (1)

and another repeating unit (II) represented by the formula

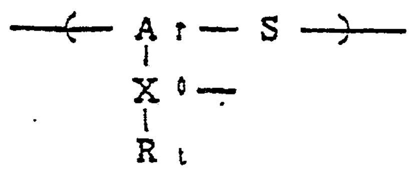

... (2)

wherein Ar is an aromatic radical, $X^{o}$ is a member selected from the group consisting of -N-, -S- and -O-, and R is a member selected from the group of hydrogen and alkyl and aryl radicals. When $X^{o}$ is each of -N-, t is 1 and when $X^{o}$ is -S- and -O-, t is 0;

containing 90 to 99.99% by weight of repeating unit (I) and 10 to 0.01% by weight of repeating unit (II); and

having an average molecular weight of 2000 to 500,000.

White, high purity (i.e., low content of salt impurities) polyarylene sulfides having the above-mentioned chemical structure can be produced without causing the reactor to be corroded during hydration and polycondensation in a preferred process comprising previously dehydrating a hydrous alkali metal sulfide in a polar solvent in the presence of a lithium compound, and contacting a dihalogenated aromatic compound with an alkali metal sulfide in the presence of an active hydrogen-containing halogenated aromatic compound and/or a halogenated aromatic nitro compound.

These polyarylene sulfides are inferred to consist usually of 1 to 500, preferably 50 to 200, repeating unit represented by (I) and 1 to 10, preferably 1 to 5, repeating unit (II) and have the linkage represented by

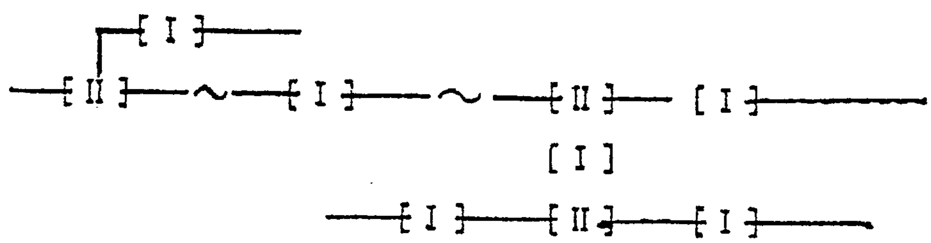

The structure of repeating unit (II), which varies with the structures of an active hydrogen-containing aromatic dihalogen compound (which will be described later) and/or a halogenated aromatic nitro compound, is preferred to be one represented by the formula

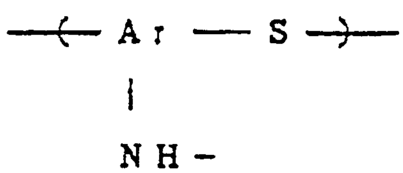

... (2a)

wherein Ar is an aromatic radical.

In such a polyarylene sulfide, the content of repeating unit (I) is usually 90 to 99.99% by weight, preferably 98 to 99.95% by weight, and the content of repeating unit (II) is usually 10 to 0.01% by weight, preferably 2 to 0.05% by weight.

A content of repeating unit (II) exceeding 10% by weight reflects a polymer product becoming gelled or colored during preparation of polyarylene sulfide or during molding of it. On the other hand, a polymer product having a smaller content of less than 0.05% by weight and a lower molecular weight is poor in mechanical properties such as stiffness.

The term " weight-average molecular weight " of a polymer product according to the present invention implies a value determined at 235°C by the light-scattering photometry using 1-chloronaphthlene, and is generally within the range of 2000 to 500,000, preferably 10,000 to 200,000. Polyarylene sulfide having less 2000 of weight-average molecular weights may be impaired in mechanical properties such as stiffness while exceeding the range reflects poorer moldability.

The logarithmic viscosity number $\eta_{inh}$ of polyarylene sulfide according to the present invention (determined at 206°C in 1-chloronaphthalene at a polymer concentration of 0.4 g/ dl solution) is usually 0.03 to 0.60.

Polyarylene sulfides according to the invention can be

prepared, for example, by contacting a dihalogenated aromatic compound with an alkali metal sulfide in a polar solvent in the presence of an active hydrogen-containing dihalogenated aromatic compound.

The process of preparing polyarylene sulfides in accordance with the present invention will be described below:

Suitable polar solvents for the above-stated use are, for example, amide compounds, lactam compounds, urea compounds, organic cyclic phosphorous compounds.

Typical examples of these include N,N-dimethyformamide, N,N-dimethylacetamide, N,N-diethylacetamide, N,N-dipropylacetamide, N,N-dimethylbenzoic acid amide, caprolactam, N-methylcaprolactam, N-ethylcaprolactam, N-isopropylcaprolactam, N-isobutylcaprolactam, N-propylcaprolactam, N-butylcaprolactam, N-cyclohexylcaprolactam, N-methyl-2-pyrrolidone, N-ethyl-2-pyrrolidone, N-isopropyl-2-pyrrolidone, N-isobutyl-2-pyrrolidone, N-propyl-2-pyrrolidone, N-butyl-2-pyrrolidone, N-cyclohexyl-2-pyrrolidone, N-methyl-3-melthyl-2-pyrrolidone, N-methyl-3, 4, 5-trimethyl-2-pyrrolidone, N-methyl-2-piperidone, N-ethyl-2-piperidone, N-isopropyl-2-piperidone, N-isobutyl-2-piperidone, N-methyl-6-methyl-2-piperidone, N-methyl-3-ethyl-2-piperidone, N-methyl-2-oxo-hexamethyleneimine, N-ethyl-2-oxo-hexamethylenimine, tetramethylurea, 1,3-dimethylethyleneurea, 1,3-dimethylpropyleneurea, 1-methyl-1-oxosulforane,1-ethyl-1-oxosulforane,1-phenyl-1-oxosulforane, 1-

methyl-1-oxophosphorane, 1-propyl-1-oxophosphorane, 1-phenyl-1-oxophosphorane, etc.

These compounds can be used as solvents alone or in combination of two or more.

Of those, preferred polar solvents are lactam compounds, more preferrably N-alkyllactams, further preferrably N-alkylpyrrolidones and especiaaly preferably N-methyl pyrrolidone.

Suitable dihalogenated aromatic compounds for use in the invention include, for example, dihalobenzenes such as m-dichlorobenzene, p-dichlorobenzene, p-dibromobenzene, m-dibromobenzene, and 1-chloro-4-bromobenzene; and dihalo substituted-benzenes such as 2,5-dichlorotoluene, 2,5-dichloro-xylene, 1-ethyl-2,5-dichlorobenzene, 1-ethyl-2,5-dibromobenzene, 1-ethyl-2-bromo-5-chlorobenzene, 1,2,4,5-tetramethyl-3, 6-dichlorobenzene, 1-cyclohexyl-2,5-dichlorobenzene, 1-phenyl-2,5-dichlorobenzene, 1-benzyl-2,5-dichlorobenzene, 1-phenyl-2,5-dibromobenzene, 1-p-toluyl-2,5-dichlorobenzene, 1-p-toluyl-2, 5-dibromobenzene, and 1-hexyl-2, 5-dichlorobenzene; etc. Of these are preferred dihalobenzene, preferably p-dichlorobenzene.

Suitable alkali metal sulfides for use in the present invention are, for example, lithium sulfide, sodium sulfide, potassium sulfide, rubidium sulfide, cesium sulfide, and the like, and mixtures of these. Generally hydrous or hydrated alkali metal sulfides or aqueous mixtures of these can be used.

Such hydrous alkali metal sulfides includes $Na_2S \cdot 9H_2O$, $Na_2S \cdot 5H_2O$, $Na_2S \cdot 3H_2O$ and mixtures of these.

Of these, lithium sulfide and sodium sulfide are preferred.

Suitable active hydrogen-containing halogenated aromatic compounds for use in the present invention are, for example, compounds represented by any of the formulae (3) and (4)

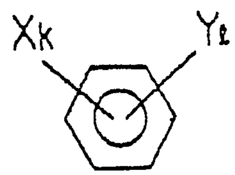

... (3)

wherein X is a halogen atom of fluorine, chlorine, bromine or iodine, Y is -NHR' (R' being hydrogen, alkyl or aryl), -SH or -OH, k is an integer of 2 to 5, and l is an integer of 1 to 4, and k+l is an integral number of from 3 to 6,

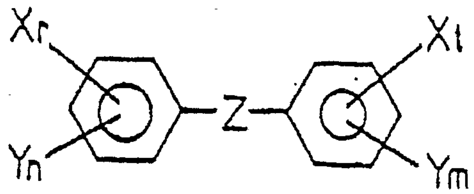

... (4)

wherein X is a halogen atom of fluorine, chlorine, bromine or iodine, Y is -NHR' (R' being hydrogen, alkyl or aryl), -SH or -OH, Z is -O-, -S-, -SO-, $-SO_2-$, -CO-, $-(-CR^1R^2)_p-$ ($R^1$ and $R^2$ being hydrogen or alkyl) or a simple chemical bond, r, t, m and n are each 0 or an integer of 1 or greater and have the relationships among them:

$2 \leqq (r+t) \leqq \{10-(n+m)\}$,

$1 \leqq (n+m) \leqq \{10-(n+m)\}$,

$(r+n) \leqq 5$, and $(t+m) \leqq 5$

Examples of active hydrogen-containing halogenated aromatic compounds represented by formula (3) include polyhalobenzenes, for example, active hydrogen-containing dihalobenzenes such as 2,6-dichloroaniline, 2,5-dichloroaniline, 2,4-dichloroaniline, and 2,3-dichloroaniline; active hydrogen-containing trihalobenzenes such as 2,3,4-trichloroaniline, 2,3,5-trichloroaniline, 2,3,6-trichloroaniline, 2,4,5-trichloroaniline, 2,4,6-trichloroaniline, and 3,4,5-trichloroaniline; and active hydrogen-containing tetrahalobenzenes such as 2,3,4,5-tetrachloroaniline, and 2,3,5,6-tetrachloroaniline; etc.

Examples of active hydrogen-containing dihalogenated aromatic compounds represented by formula (4) include as typical examples 2,2'-diamino-4,4'-dichlorodiphenyl ether, 2,4'-diamino-2',4-dichlorodiphenyl ether; 2,2'-diamino-4,4'-dichlorodiphenyl thioether, 2,4'-diamino-2',4-dichlorodiphenyl thioether; 2,2'-diamino-4,4'-dichlorodiphenylsulfoxide, 2,4'-diamino-2',4-dichlorodiphenylsulfoxide; 2,2'-diamino-4,4'-dichlorodiphenylsulfone, 2,4'-diamino-2',4-dichloro.diphenylsulfone, 2,2'-diamino-4,4'-dichlorodiphenylmethane, 2,4'-diamino-2',4-dichlorodiphenylmethane; 2,5-dichloro-4'-aminodiphenyl ether, 2,5-dibromo-4'-aminodiphenyl ether; 2, 5-dichloro-4'-aminodiphenyl thioether, 2,5-dibromo-4'-aminodiphenyl thioether; 2,5-dichloro-4'-aminodiphenyl sulfoxide, 2,5-dibromo-4'-aminodiphenyl sulfoxide; 2,5-dichloro-4'-aminodiphenylsulfone, 2,5-dibromo-4'-aminodiphenylsulfone; 2,5-dichloro-4'-aminodiphenylmethane, 2,5-dibromo-4'-aminodiphenylmethane; etc.

Polyarylene sulfides can be prepared by the use of an amino radical-substituted and halogen-substituted naphthalene ring containing active hydrogen in stead of active hydrogen-containing dihalogenated aromatic compounds represented by formulae (3) and (4).

Of the above-mentioned active hydrogen-containing halogenated aromatic compounds are preferred those represented by the formula

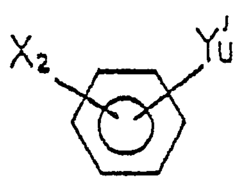

... (5)

wherein X is a halogen atom, Y is $-NHR^{\circ}$ ($R^{\circ}$ being alkyl or aryl) or $NH_2$, and u is an integer of 1 to 4, and dichloroaniline is particularly preferred.

The reaction system is generally composed as follows:

The mole ratio of a dihalogenated aromatic compound (a)

to an alkali metal sulfide (b), i.e mole ratio (a)/(b), is 0.75 to 2.0, preferably 0.90 to 1.2, this range being because of equal mole reaction between both reactants.

An active hydrogen-containing halogenated aromatic compound (c) is 0.005 to 2.0 mole % , preferably 0.01 to 1.5 mole%, based on (b) component. Less than 0.005 mole % of component (c) may result in lower molecular weight of the produced polyarylene sulfide and more than 2.0 mole % may cause gelation.

Mole ratio of a polar solvent (d) to an alkali metal sulfide (b) is 1 to 15, preferably 2 to 10. Mole ratios less than 1 may result in heterogenous reaction and those exceeding 15 may reflect lower productivity.

For the production of a polyarylene sulfide, an alkali metal hydroxide (e), a known metal carboxylate or aromatic sulfonate is desired to be added to the reaction system as catalyst. A reducing agent may be added, too.

Suitable examples of the alkali metal hydroxide include lithium hydroxide, sodium hydroxide, potassium hydroxide, rubidium hydroxide, cesium hydroxide, etc. Of these, lithium hydroxide, sodium hydroxide and potassium hydroxide are preferred.

Suitable metal carboxylate examples include lithium acetate, lithium propionate, lithium 2-methylpropionate,

lithium butyrate, lithium 3-methylbutyrate, lithium valerate, lithium hexanoate, lithium heptanoate, lithium benzoate, sodium benzoate, zinc acetate. Of these, lithium carboxylate is preferred. Hydrates of these metal carboxylates may be used, too.

Suitable aromatic carboxylates are, for example, sodium p-toluenesulfonate.

The reaction may be carried out under reducing atmosphere, or in the presence of a reducing agent. Examples of some reducing agents include hydrazine, hydrides, alkali formates, etc. Preferred examples of these are hydrides, particularly borohydrides such as lithium borohydride, sodium borohydride ($NaBH_4$) and potassium borohydride, and calcium hydride ($CaH_2$).

Mole ratio of component (e) / component (b) is not more than 2.0, preferably 0.01 to 1.5. Mole ratios more than 2.0 may result in a polymer product of a not desirably small melt flow.

Alkali metal hydrides are used for making the reaction system alkaline and so their amount to be added to it is not specified.

The reaction can be accomplished by contacting together all components simultaneously or by a series of contacts between components of the reaction system.

The reaction is carried out usually in a temperature range of 180 to 320°C, preferably 220 to 300°C.

Reaction time is generally not more than 20 hours, preferably 0.1 to 8 hours.

After termination of reaction, the polyarylene sulfide can be directly obtained from a reaction solution by routine means such as filtration and centrifugation or from a reaction solution added water and/or dilute acid solution.

Subsequent to filtration, the separated polymer is washed with water to remove some inorganic impurities probably attached thereto, for example, alkali metal sulfides and hydroxides. Besides washing or after washing, extraction with suitable other liquids may be carried out. Following the removal of solvent from the reactor by distillation, washing is conducted in such a way as above-stated, thus the polymer being possible to be recovered.

In this way, a polyarylene sulfide according to the invention can be produced. A further preferred process of preparing a polyarylene sulfide, in particular of white, high purity, i.e., containing less impurities in the form of salt, high molecular weight and high crystallizability comprises conducting preparatory dehydration of a hydrous alkali metal sulfide in a polar solvent in the presence of a

lithium compound, and contacting a dihalogenated aromatic compound with an alkali metal sulfide in the presence of an active hydrogen-containing halogenated aromatic compound and/or a halogenated aromatic nitro compound.

As individual components for use in this preferred process such as polar solvent, hydrous alkali metal sulfide, active hydrogen-containing halogenated aromatic compound, dihalogenated aromatic compound and alkali metal sulfide can be used respective examples mentioned above.

Examples of suitable lithium compounds for use in this preferred process includes, for example, lithium salts of mineral acids such as lithium fluoride, lithium chloride, lithium bromide, lithium iodide, lithium carbonate, lithium hydrogencarbonate, lithium sulfate, lithium hydrogensulfate, lithium sulfite, lithium phosphate, lithium hydrogenphosphate, lithium dihydrogenphosphate, lithium nitrate, and lithium nitrite; salts of oxygen acids such as lithium chlorate, lithium chromate, and lithium molybdenate; lithium carboxylates such as lithium formate, lithium oxalate, lithium malonate, lithium propionate, lithium butyrate, lithium isobutyrate, lithium maleate, lithium fumarate, lithium 2-methylpropionate, lithium 3-methylbutyrate, lithium valerate, lithium hexanoate, lithium heptanoate, lithium octanoate, lithium

tartarate, lithium stearate, lithium benzoate, lithium phthalate; lithium sulfonates such as lithium benzenesulfonate and lithium p-toluenesulfonate; lithium alkoxides such as lithium methoxide, lithium ethoxide, lithium isopropoxide, lithium n-propoxide, lithium butoxide, and lithium phenoxide; organic lithium compounds such as lithium acetylacetonate; and other lithium compounds such as lithium sulfide, lithium oxide, lithium hydroxide, etc.

These lithium compounds may be used alone or in combination of two or more of them.

Of these are preferred lithium halogenides such as lithium chloride, lithium carboxylates such as lithium acetate, and lithium carbonate, preferably lithium chloride.

Suitable halogenated aromatic nitro compounds for use in the preferred process are selected from the group consisting of compounds represented by the formula

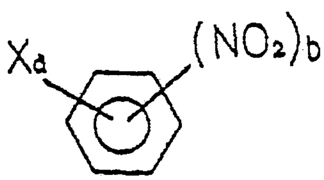

... (6)

wherein $X^1$ is a halogen atom, a and b are each an integer of 1 or 2 and 1 to 5, respectively, besides meeting $3<a+b<6$, compounds represented by the formula

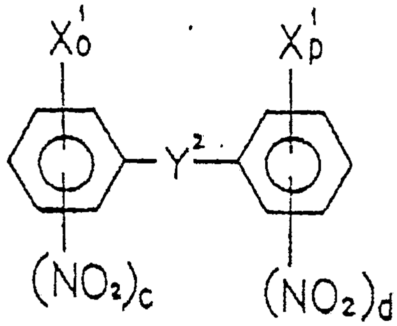

... (7)

wherein $Y^2$ is a single bond, -O-, -S-, $-\underset{\underset{O}{\|}}{S}-$, and $-(CH_2)_w-$ (w being an integer of 1 or greater), o and p are each an integer of 0 to 2, besides meeting o + p = 1 or 2, and c and d are each an integer of 0 to 5, besides meeting $1 < c + d \leqq 10 - (o + p)$, and compounds represented by the formula

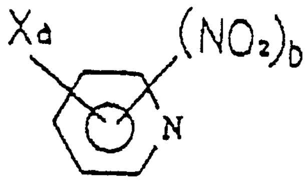

... (8)

wherein e is an integer of 1 or 2, f is an integer of 1 to 4, besides meeting $3 < e + f < 5$.

Examples of some compounds represented by general formula (6) include 2,4-dinitrochlorobenzene, 2,5-dichloronitrobenzene, and the like.

Examples of compounds represented by general formula (7) include 2-nitro-4,4'-dichlorodiphenyl ether, 3,3'-dinitro-4,4'-dichlorodiphenylsulfonate, and the like.

Examples of compounds represented by general formula (8) include 2,5-dichloro-3-nitropyridine, 2-chloro-3,5-dinitropyridine, and the like.

These halogenated aromatic compounds can be used alone or in combination of two or more.

Derivatives of compounds represented by formulae (6) through (8) are suitable halogenated aromatic nitro compounds for use in the preferred process, too.

Of these halogenated aromatic nitro compounds are preferred dihalogenated aromatic nitro compounds, preferably 2,5-dichloronitrobenzene.

In a further preferred embodiment of process according to the invention, the above-stated dehydration of hydrous alkali metal sulfide in a polar solvent in the presence of a lithium compound is preferred to be carried out in a mole ratio between lithium compound and hydrous alkali metal sulfide within a range of 0.03 to 2.0, preferably 0.1 to 1.6. Mole ratios less than 0.03 may take insufficient corrosion-preventing effect, and those exceeding 2.0 may make the polymerization subsequent to the dehydration step so difficult that results in a lower yield of polyarylene sulfide.

The polymerization is desired to carried out in mixing ratios described under:

The mole ratios of ( dihalgenated aromatic compound ) / ( alkali metal sulfide ) and the mole ratios of ( active hydrogen-containing halogenated aromatic compound ) / ( alkali metal sulfide ) are as described above.

Mole ratio of (dihalogenated aromatic nitro compound) / (alkali metal sulfide) is generally 0.05 to 2.0 mole %, preferably 0.1 to 1.0 mole %. The addition of (e) component less than 0.05 mole % may result in greater melt flow value of polymer product while the addition exceeding 2.0 mol % may obtain gelled polymer.

Mole ratio of (lithium compound) / (alkali·metal sulfide) is generally 0.001 to 2.0, preferably 0.01 to 1.5. Mole ratios less than 0.001 may result in a lower molecular weight of polyarylene sulfide product and a dissatisfactorily small amount of residual salt impurities in the polymer, such as sodium chloride and the like, and those greater than 2.0 may allow salt used as catalyst to remain at a high concentration in the polymer and not allow to obtain polymer having sufficiently high molecular weight.

Reaction time, reaction temperature and purification of the polymer product in the last embodiment are the same as described above.

As the thus-obtained polyarylene sulfide has a much low content of salts, such as sodium chloride and the like, remaining in the polymer compared with the polymer produced by the known technique, it has high electrically-insulating resistance under humidity. Said polyarylene sulfide can be directly (i.e., with no need of desalting step) processed

or molded into some articles used in electric or electronic fields. If desired, different desalting steps in addition to washing can be conducted to reduce the content of salts, such as sodium chloride and the like, in the resin.

Polyarylene sulfides according to the invention can be mixed with other polymers, pigments and fillers (such as graphite, metal powders, quart powder or glass fibers), conventional additives (such as stabilizers, mold releasing agent), and thereby molded into articles for more various uses or fields.

Polyarylene sulfides according to the invention has advantages of small melt flow, high molecular weight, and being good in crystallizability, moldability and stiffness.

As described above, the present invention enables to provide polyarylene sulfides which are moldable into various films, fibers, and other molded articles, and thus which are excellent engineering plastics advantageously usable for machanical and electronic parts, etc.

## BRIEF DESCRIPTION OF THE DRAWINGS

Fig.1 shows the IR absorption spectrum of the polyarylene sulfide of Example 1 made in the process embodying the present invention;

Fig.2 shows the spectrum of a polyarylene sulfide obtained by an prior art process;

Fig.3 is a chart showing the gas chromatogram of the polyarylene sulfide obtained in Example 3; and

Fig.4 is a chart showing the gas chromatogram of the polyarylene sulfide obtained in Comparative Example 2.

The invention will be described more fully by way of Examples and Comparative Examples hereinafter:

Example 1

To a 2-liter autoclave, 81.5g (0.56 mole) p-dichlorobenzene, 25.0g (0.54 mole) lithium sulfide, 0.164g (0.001 mole) 2,5-dichloroaniline 0.914g (0.024 mole) sodium boron hydride and 306ml (2.93 mole) N-methyl-2-pyrrolidone as a solvent were charged. The autoclave was flushed with nitrogen at ordinary temperature for 10 minutes, and then heated to 120° C with stirring. At this point, it was sealed tightly, further heated to 265° C, and kept so for 3 hours to be allowed to react. After completion of reaction,the autoclave was cooled to 190°C., allowed to stand until room temperature was reached. A reaction product was poured into 1-liter water, filtered off, and washed with water, followed by methanol, for 30 minutes, respectively.

The logarithmic viscosity number $\eta_{inh}$ of the thus-obtained polyphenylene sulfide (206°C, 0.4 g/dl 1-chloronaphthalene solution) was 0.27, and melt flow index was 0.034 ml/sec, as measured through a nozzle (diameter:

1mm, length: 10mm) at 300°C under a load of 50 $kg/cm^2$.

The polyphenylene sulfide had contents: repeating unit (I) 99.82% by weight and repeating unit (II) 0.18% by weight. The weight-average molecular weight was 75,100.

Data for identificaton was as follows:

(1) IR absorption spectrum (KBr tablet): 1320 $cm^{-1}$(C-N)

The spectrum is shown in Fig.1.

(2) Nitrogen (Kjeldahl method): 0.011%.

The IR absorption spectrum of C-N bond is based on the IR absorption spectrum of C-N bond about diphenylamine (no secondary production of triphenylamine) resulting from the reaction of chlorobenzene and aniline.

Example 2

To a 2-liter autoclave were charged 130.4g (0.54 mole) sodium sulfide nonahydrate, 35.8g (0.54 mole) lithium acetate, 40.1g (0.54 mole) lithium carbonate and 370ml N-methyl-2-pyrrolidone, and subjected to azeotropic distillation to remove 88ml of water. To the resultant, 81.5g (0.56 mole) p-dichlorobenzene, 0.161g (0.001 mole) 2,5-dichloroaniline and 150ml N-methyl-2-pyrrolidone were added, and reaction was carried out at 265°C under nitrogen atmosphere for 3 hours. The reaction product was poured into a 0.1N hydrochloric acid solution, filtered off, washed with water, followed by methanol, for 30 minutes, respectively.

The logarithmic viscosity number $\eta_{inh}$ of the thus-obtained polyphenylene sulfide (206°C, 0.4 g/dl 1-chloronaphthalene solution) was 0.19, and melt flow index was 0.40 ml/sec.

The polyphenylene sulfide had contents: repeating unit (I) 99.84% by weight and repeating unit (II) 0.16% by weight. The weight-average molecular weight was 40,100.

Data for identificaton was as follows:

(1) IR absorption spectrum (KBr tablet): 1320 $cm^{-1}$(C-N)

(2) Nitrogen (Kjeldahl method): 0.010%.

Example 3

To a stainless-steel (SUS 3161) 2-liter autoclave were charged 130.4g (0.54 mole) sodium sulfide nonahydrate, 23.0g (0.54 mole) lithium chloride, and 356 ml N-methylpyrrolidone, and subjected to azeotropic distillation to remove 288ml of a mixture of N-methylpyrrolidone and water. The evoluted hydrogen sulfide was trapped with a sodium hydroxide solution, and determined by iodometry with the result of 1.5 mole % based on the used sodium sulfide.

To the resultant, 81.5g (0.56 mole) p-dichlorobenzene, 0.80g (0.005 mole) 2,5-dichloroaniline and 150ml N-methylpyrrolidone were added, and allowed to react at 265°C under nitrogen atmosphere for 3 hours. After cooled to room temperature, the autoclave was opened, in which light yellow

N-methylpyrrolidone phase and at the bottom of which granular polymer and white powder were observed. The autoclave was noted to undergo no corrosion and remain lustrous.

The reaction product, after ion exchange-purifed water is poured to it, filtered off, washed with ion exchange-purified water, followed by methanol. Thus a white, granular polyphenylene sulfide (52.9g) was obtained and the logarithmic viscosity number $\eta_{inh}$ (206°C, 0.4 g/dl 1-chloronaphthalene solution) was 0.31.

The reaction product was subjected to gas chromatography (Column: PEG-20M chromosorb; column temperature: 200°C, detector temperature: 230°C, injector temperature: 230°C) to determine N-methylpyrrolidone.

The results are shown in Fig.3.

The yielded polyphenylene sulfide had contents: repeating unit (I) 99.80% by weight and repeating unit (II) 0.20% by weight. The weight-average molecular weight was 73,200.

Comparative Example 1

The same procedure was carried out as in Example 3 except that the azeotropic dehydration of sodium sulfide nonahydrate was conducted in stead of using lithium chloride, and that after the azeotropic distillation, 160ml N-methylpyrrolidone containing 23.0g lithium chloride (0.54

mole) as well as chlorobenzene and 2,5-dichloroaniline were added, and thus polyphenylene sulfide was obtained. After termination of the reaction, N-methylpyrrolidone was determined by gas chromatography. The evolution of hydrogen sulfide associated with the dehydration was 0.52% on the used sodium sulfide basis. Before the filtration, the autoclave was opened, and deep blown N-methylpyrrolidone phase in it was observed. Besides black rust was noted to be formed on the autoclave wall area placed in contact with the reaction solution.

After filtration and washing was obtained a blown granular polyphenylene sulfide (47.5g) having a logarithmic viscosity index $\eta_{inh}$ (206°C, 0.4 g/dl 1-chloronaphthalene solution) of 0.27.

The reaction product was subjected to gas chromatography, and the results are shown in Fig.4.

As apparent from Fig.4, after termination of reaction, N-methylpyrrolidone became contaminated with impurities.

The yielded polyphenylene sulfide had contents: repeating unit (I) 99.83% by weight and repeating unit (II) 0.17% by weight. The weight-average molecular weight was 72,900.

Example 4

The same procedure was carried out as in Example 3 except that instead of 0.80g (0.005 mole) 2,5-dichloroaniline,

0.103g (0.0006 mole) 2,5-dichloro-1-nitrobenzene was used.

The obtained granular polyphenylene sulfide (53.8g) was white, and the logarithmic viscosity number $\eta_{inh}$ (206°C, 0.4 g/dl 1-chloronaphthalene solution) was 0.45.

The polyphenylene sulfide gave a IR absorption spectrum having an absorpion of 1,320 $cm^{-1}$ correspondent to C N bond but there being no absorption correspondent to $\cdot NO_2$ in it.

The polyphenylene sulfide had contents: repeating unit (I) 99.77% by weight and repeating unit (II) 0.23% by weight. The weight-average molecular weight was 148,200.

Reference Example 2

The same procedure was carried out as in Example 1 except that instead of 0.80g (0.005 mole) 2,5-dichloroaniline, 0.893g (0.005 mole) trichlorobenzene was used. The produced polymer became gelled and insoluble in the autoclave.

Industrial use

Polyarylene sulfides according to the present invention have high molecular weight, small melt flow and high crystallizability, and are good in moldability and stiffness. They are moldable into various films, fibers and other molded articles, and markedly useful for mechanical parts and electronic parts, etc.

WHAT IS CLAIMED IS:

1. A polyarylene sulfide having a repeating unit (I) represented by the formula

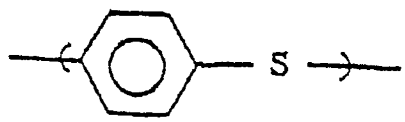

... (1)

and another repeating unit (II) represented by the formula

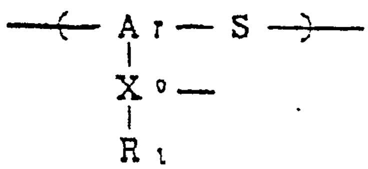

... (2)

wherein Ar is an aromatic radical, X° is a member selected from the group consisting of -N-, -S- and -O-, and R is a member selected from the group of hydrogen and alkyl and aryl radicals. When X° is -N-, t is 1 and X° is -S- or -O-, t is 0.

containing 90 to 99.99% by weight of repeating unit (I) and 10 to 0.01% by weight of repeating unit (II); and having an weight average molecular weight of 2000 to 500,000.

2. A polyarylene sulfide as defined in claim 1 wherein X° in said formula (2) is -N- and R is hydrogen atom.

3. A polyarylene sulfide as defined in claim 1 containing 98 to 99.95% by weight of said repeating unit (1) and 2 to 0.05% by weight of said repeating unit (2).

4. A polyarylene sulfide as defined in claim 1 having an weight average molecular weight of 10,000 to 200,000.

5. A polyarylene sulfide as defined in claim 1 having a logarithmic viscosity number of 0.03 to 0.60.

6. A process of preparing a polyarylene sulfide as defined in claim 1 comprising conducting preparatory dehydration a hydrous alkali metal sulfide in a polar solvent in the presence of a lithium compound, and contacting a dihalogenated aromatic compound with an alkali metal sulfide in the presence of an active hydrogen-containig halogenated aromatic compound and/or a halogenated aromatic nitro compound.

7. A process as defined in claim 6 wherein said polar solvent is a lactam compound.

8. A process as defined in claim 6 wherein said lactam compound is a N-alkylpyrrolidone.

9. A process as defined in claim 6 wherein said lactam compound is N-methylpyrrolidone.

10. A process as defined in claim 6 wherein said lithium compound is at least a member selected from the group consisting of lithium halide, lithium carboxylates and lithium carbonate.

11. A process as defined in claim 6 wherein said lithium compound is a lithium halide.

12. A process as defined in claim 6 wherein said lithium compound is lithium chloride.

13. A process as defined in claim 6 wherein said hydrous alkali metal sulfide is at least a member selected from the group consisting of lithium sulfide hydrate and sodium sulfide hydrate.

14. A process as defined in claim 6 wherein said active hydrogen-containing halogenated aromatic compound is at least a member selected from the group consisting of

compounds represented by the formula

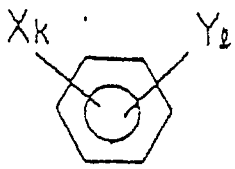

... (3)

wherein X is a halogen atom such as fluorine, chlorine or bromine, Y is -NHR (R being hydrogen, alkyl or aryl), -SH or -OH, k is integers of 2 to 5, and l is integers of 1 to 4, and k + l is always an integer between 3 and 6 ;and

compounds represented by the formula

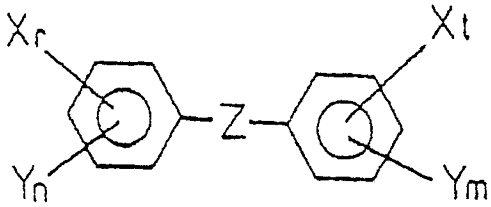

... (4)

wherein X is a halogen atom such as fluorine, chlorine or bromine, Y is -NHR (R being hydrogen, alkyl or aryl), -SH or -OH, and Z is -O-, -S-, -SO-, $-SO_2-$, -CO-, $-(CR^1R^2)_p$ ($R^1$ and $R^2$ being each hydrogen or alkyl) or a single bond, and r, t, m and n are each 0 or an integer of 1 or greater, besides

meeting the conditions: $2 \leqq (r + t) \leqq \{10 - (n + m)\}$, $1 \leqq (n + m) \leqq \{10 - (n + m)\}$, $(r + n) \leqq 5$, and $(t + m) \leqq 5$.

15. A process as defined in claim 6 wherein said active hydrogen-containing halogenated aromatic compound is represented by the formula

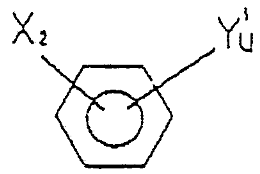

... (5)

wherein X is a halogen atom, Y is -NHR (R being alkyl or aryl) or $-NH_2$, and u is an integer of 1 to 4.

16. A process as defined in claim 6 wherein said active hydrogen-containing halogenated aromatic compound is dichloroaniline.

17. A process as defined in claim 6 wherein said halogenated aromatic nitro compound is a member selected from the group consisting of

compounds represented by the formula

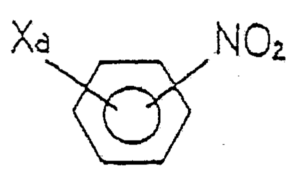

... (6)

wherein $X^1$ is a halogen atom, a and b are integers of 1 or 2 and 1 to 5, respectively, simultaneously meeting $3<a + b<6$,

compounds represented by the formula

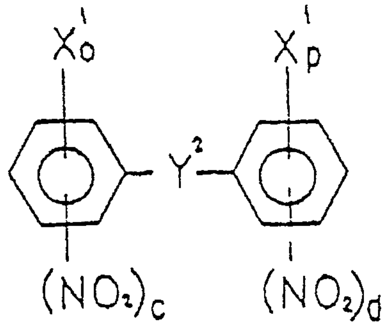

... (7)

wherein $Y^2$ is a single bond, -O-, -S-, $-\underset{\underset{O}{\|}}{S}-$, and $-(CH_2)_w-$

(w being an integer of 1 or greater), o and p are each an integer of 0 to 2, besides meeting o + p = 1 or 2, and c and d are each an integer of 0 to 5, besides meeting $1 < c + d \leqq 10 - (o + p)$, and

compounds represented by the formula

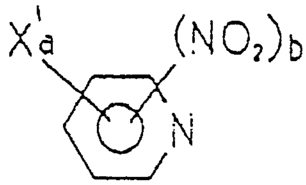

... (8)

wherein e is an integer of 1 or 2, f is an integer of 1 to 4, and besides $3 < e + f < 5$.

18. A process as defined in claim 6 wherein said halogenated aromatic nitro compound is a dihalogenated aromatic nitro compound.

19. A process as defined in claim 6 wherein said halogenated aromatic nitro compound is 2,5-dichloronitrobenzene.

20. A process as defined in claim 6 wherein said

dihalogenated aromatic compound is a dihalobenzene.

21. A process as defined in claim 6 wherein said dihalogenated aromatic compound is p-dichlorobenzene.

1/4



Fig.1

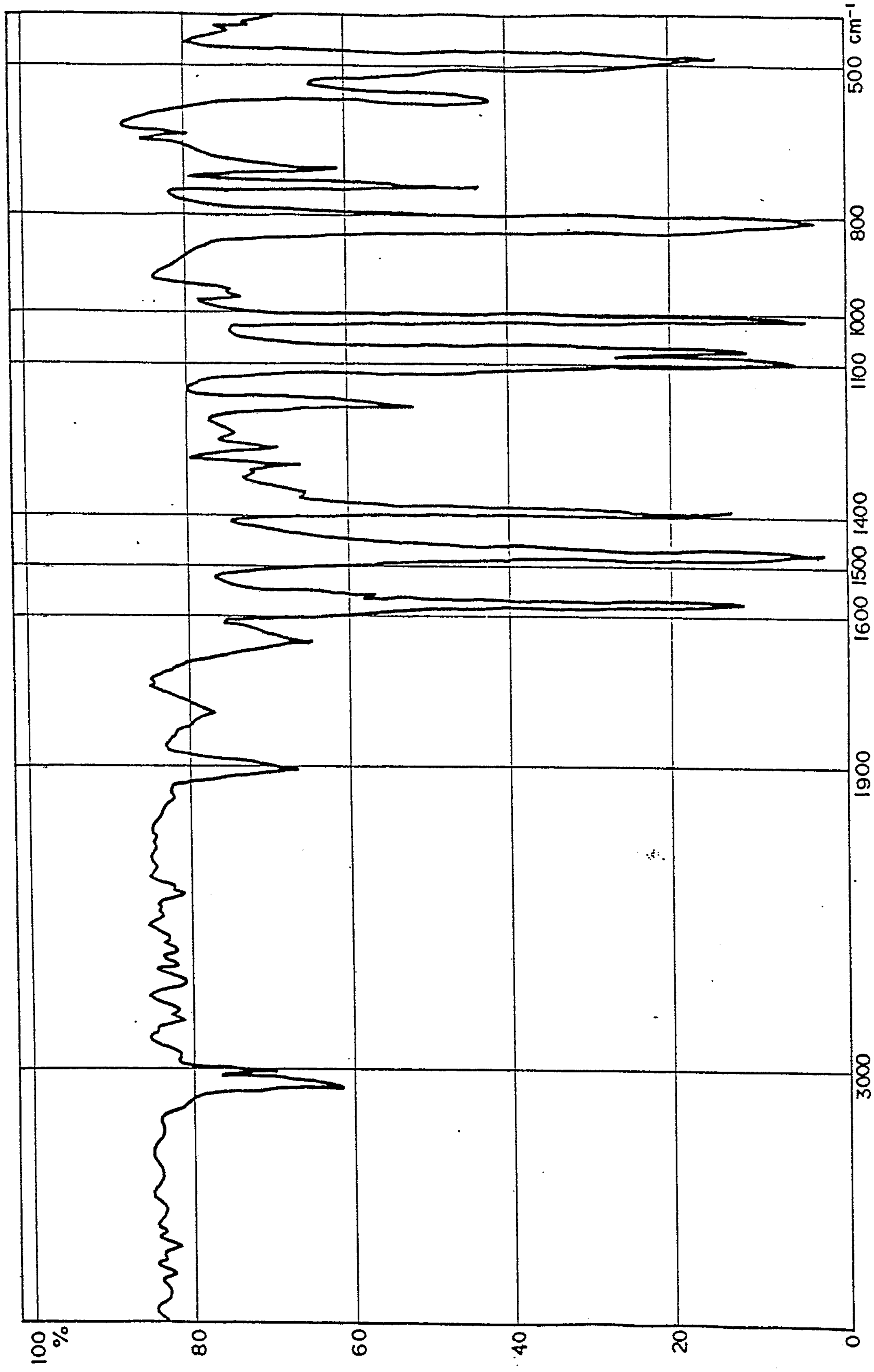

Fig.2

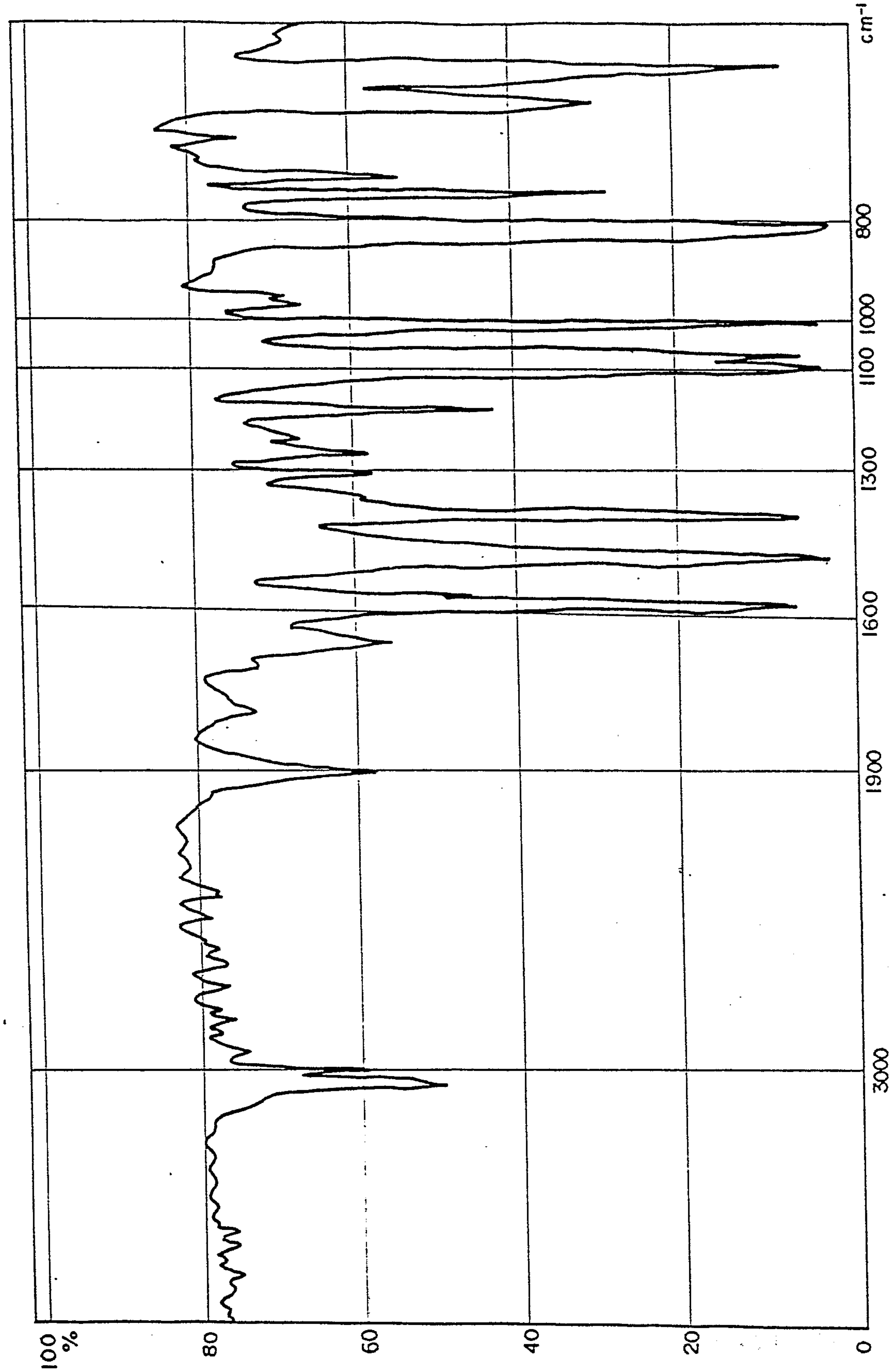

Fig.3

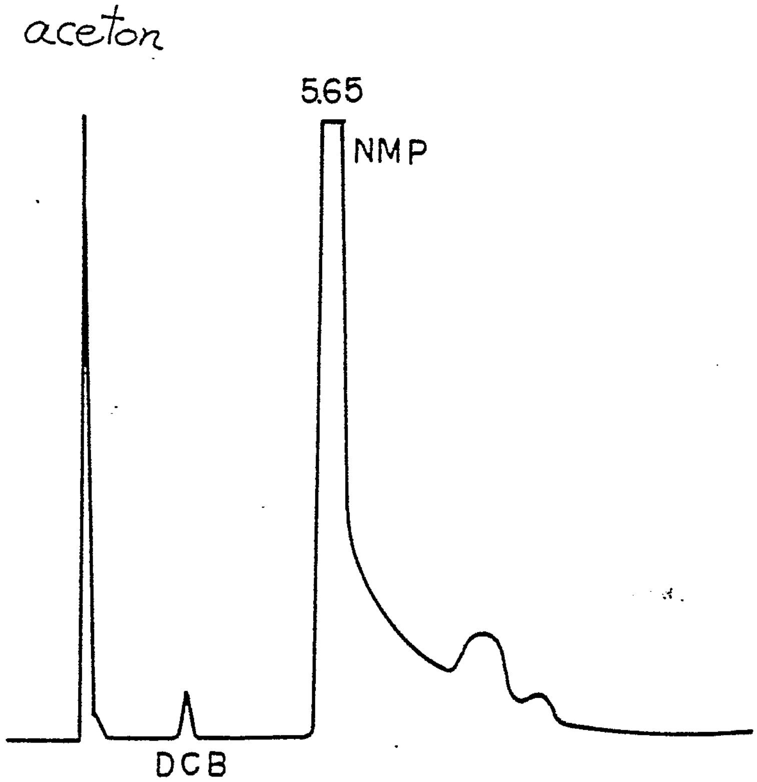

Fig.4

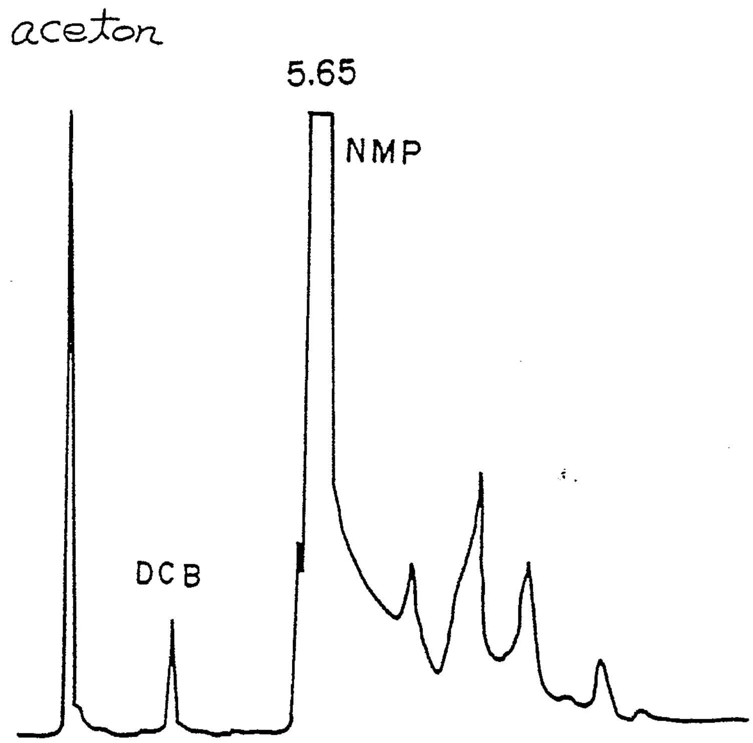

0296250

# INTERNATIONAL SEARCH REPORT

International Application No PCT/JP87/01038

**I. CLASSIFICATION OF SUBJECT MATTER** (if several classification symbols apply, indicate all) [3]

According to International Patent Classification (IPC) or to both National Classification and IPC

Int.Cl$^4$ C08G75/02

**II. FIELDS SEARCHED**

Minimum Documentation Searched [4]

| Classification System | Classification Symbols |
|---|---|
| IPC | C08G75/00-75/10 |

Documentation Searched other than Minimum Documentation to the Extent that such Documents are Included in the Fields Searched [5]

Jitsuyo Shinan Koho 1926 - 1988
Kokai Jitsuyo Shinan Koho 1971 - 1988

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| A | US, A, 4,038,263 (Phillips Petroleum Co.) 26 July 1977 (26. 07. 77) Column 6, line 37 to column 8, line 33 | 1-21 |
| A | JP, A, 59-197430 (Bayer A.G.) 9 November 1984 (09. 11. 84) Page 1, left column, line 15 to page 2, upper right column, line 5 & US, A, 4,537,951 & DE, A, 3,312,284 | 1-21 |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| March 15, 1988 (15. 03. 88) | March 28, 1988 (28. 03. 88) |
| **International Searching Authority [1]** | **Signature of Authorized Officer [20]** |
| Japanese Patent Office | |

Form PCT/ISA/210 (second sheet) (October 1977)